# EUROPEAN PATENT SPECIFICATION

(11) **EP 2 646 781 B1**
(45) Date of publication and mention of the grant of the patent: **26.12.2018**
(21) Application number: 10787094.1
(22) Date of filing: 30.11.2010
(51) Int. Cl.: G01C 21/36, G09B 29/10

(54) **NAVIGATION METHODS AND SYSTEMS**
NAVIGATIONSVERFAHREN UND SYSTEME
PROCÉDÉS ET SYSTÈMES DE NAVIGATION

(43) Date of publication of application: 09.10.2013
(73) Proprietor: TomTom Navigation B.V., 1011 AC Amsterdam (NL)
(72) Inventor: LANGENDORFF, Niels, NL-1325 SP Almere (NL)
(74) Representative: Siem, Max Yoe Shé
(86) International application number: PCT/EP2010/068535
(87) International publication number: WO 2012/072115

(56) References cited:
- WO-A1-2010/040400
- US-A- 6 092 076
- US-A1- 2006 253 247
- US-A1- 2008 243 367
- US-A1- 2008 320 419
- US-A1- 2010 088 634

## Description

### Field of the Invention

This invention relates to navigation methods and systems. The invention also extends to navigation apparatus.

Illustrative embodiments of the invention relate to portable navigation devices (so-called PNDs), in particular PNDs that include Global Positioning System (GPS) signal reception and processing functionality, and to systems and methods involving such devices. The invention is also applicable to a navigation apparatus which forms part of an integrated navigation system, e.g. an in-vehicle navigation system, and to systems and methods using such apparatus. In particular, although not exclusively, the invention is concerned with the systems and methods for the display of points of interest (POI) using such apparatus.

### Background to the Invention

The present invention is directed to navigation methods and systems, and to navigation apparatus. The apparatus may be of any suitable form as discussed above, and in more detail below. One illustrative embodiment of the apparatus is a portable navigation device. Portable navigation devices (PNDs) that include GPS (Global Positioning System) signal reception and processing functionality are well known and are widely employed as in-car or other vehicle navigation systems.

In general terms, a modern PNDs comprises a processor, memory (at least one of volatile and non-volatile, and commonly both), and map data stored within said memory. The processor and memory cooperate to provide an execution environment in which a software operating system may be established, and additionally it is commonplace for one or more additional software programs to be provided to enable the functionality of the PND to be controlled, and to provide various other functions.

Typically these devices further comprise one or more input interfaces that allow a user to interact with and control the device, and one or more output interfaces by means of which information may be relayed to the user. Illustrative examples of output interfaces include a visual display and a speaker for audible output.
Illustrative examples of input interfaces include one or more physical buttons to control on/off operation or other features of the device (which buttons need not necessarily be on the device itself but could be on a steering wheel if the device is built into a vehicle), and a microphone for detecting user speech. In a particularly preferred arrangement the output interface display may be configured as a touch sensitive display (by means of a touch sensitive overlay or otherwise) to additionally provide an input interface by means of which a user can operate the device by touch.

Devices of this type will also often include one or more physical connector interfaces by means of which power and optionally data signals can be transmitted to and received from the device, and optionally one or more wireless transmitters/receivers to allow communication over cellular telecommunications and other signal and data networks, for example Wi-Fi, Wi-Max GSM and the like.

PND devices of this type also include a GPS antenna by means of which satellite-broadcast signals, including location data, can be received and subsequently processed to determine a current location of the device.

The PND device may also include electronic gyroscopes and accelerometers which produce signals that can be processed to determine the current angular and linear acceleration, and in turn, and in conjunction with location information derived from the GPS signal, velocity and relative displacement of the device and thus the vehicle in which it is mounted. Typically such features are most commonly provided in in-vehicle navigation systems, but may also be provided in PND devices if it is expedient to do so.

The utility of such PNDs is manifested primarily in their ability to determine a route between a first location (typically a start or current location) and a second location (typically a destination). These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

Typically, the PND is enabled by software for computing a "best" or "optimum" route between the start and destination address locations from the map data. A "best" or "optimum" route is determined on the basis of predetermined criteria and need not necessarily be the fastest or shortest route. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads).

In addition, the device may continually monitor road and traffic conditions, and offer to or choose to change the route over which the remainder of the journey is to be made due to changed conditions. Real time traffic monitoring systems, based on various technologies (e.g. mobile phone data exchanges, fixed cameras, GPS fleet tracking) are being used to identify traffic delays and to feed the information into notification systems.

PNDs of this type may typically be mounted on the dashboard or windscreen of a vehicle, but may also be formed as part of an on-board computer of the vehicle radio or indeed as part of the control system of the vehicle itself. The navigation device may also be part of a hand-held system, such as a PDA (Portable Digital Assistant) a media player, a mobile phone or the like, and in these cases, the normal functionality of the hand-held system is extended by means of the installation of software on the device to perform both route calculation and navigation along a calculated route.

Route planning and navigation functionality may also be provided by a desktop or mobile computing resource running appropriate software. For example, the Royal Automobile Club (RAC) provides an on-line route planning and navigation facility at http://www.rac.co.uk, which facility allows a user to enter a start point and a destination whereupon the server to which the user's PC is connected calculates a route (aspects of which may be user specified), generates a map, and generates a set of exhaustive navigation instructions for guiding the user from the selected start point to the selected destination. The facility also provides for pseudo three-dimensional rendering of a calculated route, and route preview functionality which simulates a user travelling along the route and thereby provides the user with a preview of the calculated route.

In the context of a PND, once a route has been calculated, the user interacts with the navigation device to select the desired calculated route, optionally from a list of proposed routes. Optionally, the user may intervene in, or guide the route selection process, for example by specifying that certain routes, roads, locations or criteria are to be avoided or are mandatory for a particular journey. The route calculation aspect of the PND forms one primary function, and navigation along such a route is another primary function.

During navigation along a calculated route, it is usual for such PNDs to provide visual and/or audible instructions to guide the user along a chosen route to the end of that route, i.e. the desired destination. It is also usual for PNDs to display map information on-screen during the navigation, such information regularly being updated on-screen so that the map information displayed is representative of the current location of the device, and thus of the user or user's vehicle if the device is being used for in-vehicle navigation.

An icon displayed on-screen typically denotes the current device location, and is centred with the map information of current and surrounding roads in the vicinity of the current device location and other map features also being displayed. Additionally, navigation information may be displayed, optionally in a status bar above, below or to one side of the displayed map information, examples of navigation information include a distance to the next deviation from the current road required to be taken by the user, the nature of that deviation possibly being represented by a further icon suggestive of the particular type of deviation, for example a left or right turn. The navigation function also determines the content, duration and timing of audible instructions by means of which the user can be guided along the route. As can be appreciated a simple instruction such as "turn left in 100 m" requires significant processing and analysis. As previously mentioned, user interaction with the device may be by a touch screen, or additionally or alternately by steering column mounted remote control, by voice activation or by any other suitable method.

A further important function provided by the device is automatic route re-calculation in the event that: a user deviates from the previously calculated route during navigation (either by accident or intentionally); real-time traffic conditions dictate that an alternative route would be more expedient and the device is suitably enabled to recognize such conditions automatically, or if a user actively causes the device to perform route re-calculation for any reason.

It is also known to allow a route to be calculated with user defined criteria; for example, the user may prefer a scenic route to be calculated by the device, or may wish to avoid any roads on which traffic congestion is likely, expected or currently prevailing. The device software would then calculate various routes and weigh more favourably those that include along their route the highest number of points of interest (known as POIs) tagged as being for example of scenic beauty, or, using stored information indicative of prevailing traffic conditions on particular roads, order the calculated routes in terms of a level of likely congestion or delay on account thereof. Other POI-based and traffic information-based route calculation and navigation criteria are also possible.

Although the route calculation and navigation functions are fundamental to the overall utility of PNDs, it is possible to use the device purely for information display, or "free-driving", in which only map information relevant to the current device location is displayed, and in which no route has been calculated and no navigation is currently being performed by the device. Such a mode of operation is often applicable when the user already knows the route along which it is desired to travel and does not require navigation assistance.

Devices of the type described above, for example the GO950 LIVE model manufactured and supplied by TomTom International B.V., provide a reliable means for enabling users to navigate from one position to another.

It has been recognised that it is often desirable to display points of interest to users of navigation apparatus. In existing systems, points of interest (POI) are typically displayed to a user on a digital map dependent upon a location of the POI relative to a current e.g. GPS location of the apparatus, and hence the user. For example, a POI may be displayed when the location of the POI is within a given range of a current location of the apparatus. Alternatively, a user may specify a given location of interest, and POI within a given range of the specified location may be displayed. Such arrangements may be used when a user wishes to look at POI in the vicinity of a location to which a trip is planned, or in the vicinity of a home location etc.

US6092076 discloses a method and system for map display in a navigation application, wherein a map display tool is adapted to render a map for a predetermined geographic region.

WO 2010/040400 discloses to a navigation apparatus and method of displaying areas with high density of POIs.

The Applicant has realised that a user may not be interested in all POIs within a given range of a current location, or a specified location, at all times. For example, when the user is on holiday, they may not wish to see POI associated with work which happen to be nearby. When the user is travelling in the winter, they may not be interested in nearby beach type POI. When travelling in the morning, they may not wish to see bars and restaurants.

The Applicant has realised that there remains a need for an improved, and more flexible method of selecting POIs for display to a user of a navigation apparatus.

### Summary of the Invention

In accordance with a first aspect of the invention there is provided a method of selecting one or more points of interest (POIs) for display by a navigation apparatus, according to claim 1.

In accordance with a second aspect of the invention there is provided a system for selecting one or more points of interest for display by a navigation apparatus, according to claim 11.

In accordance with another aspect of the invention there is provided a navigation apparatus according to claim 12.

In accordance with still another aspect of the invention there is provided a computer program product according to claim 15.

It will be appreciated that the present invention therefore provides a method of selecting one or more points of interest (POI) for display by a navigation apparatus, and the system provides a system for selecting one or more points of interest (POI) for display by a navigation apparatus. The term "POI" should be understood as being an abbreviation for point or points of interest herein.

It will be appreciated that the method may comprise any of the steps described as being carried out by the system, and the system may comprise means for carrying out any of the steps of the method if not explicitly stated. Furthermore, it will be appreciated that the navigation apparatus may comprise a set of one or more processors arranged to carry out the steps described. Thus any step described as being carried out by "the processor" need not be carried out by the same processor as any other step, and need not be carried out by a single processor. Thus the "processor" of the apparatus may be a set of one or more processors.

In accordance with the invention therefore, one or more points of interest associated with each given predefined area are selected for display only when at least two different criteria governing the display of the POI associated with the area are simultaneously meet, including a location criterion and one or more further display criteria. As discussed in more detail below, the at least one display criterion specifies a requirement regarding a current time, and state of operation of the apparatus which must be met in order for the points of interest to be displayed. In this way, rather than making all points of interest associated with a given predefined area which meet just a location criterion available for display, another criterion must additionally be satisfied, resulting in more tailored display of points of interest to a user. By taking further criteria beyond merely location into account, the invention enables points of interest of greater relevance to a user in a given situation to be displayed. For example, when the user is on holiday, they may put the device into a holiday mode of operation, such that only points of interest associated with an area associated with a criterion specifying that the apparatus must be in a holiday mode in order for the POI to be displayed are selected for display. Other POI associated with an area which may meet a criterion regarding location will not be displayed if the area does not meet the additional criterion regarding the mode of operation of the apparatus. During the week, the device may only display points of interest associated with areas having a display criterion requiring that the current time is a weekday time, and not a weekend time.

In accordance with the invention, each of one or more predefined geographic areas is associated respectively with one or more POI. The area and the POI are associated with one another. The or each predefined area is associated with a respective set of one or more POI. The or each area is also associated with at least one display criterion controlling the display of the POI. In this way, rather than associating display criteria individually with POI, a set of POI is formed by associating the same area with one or more POI, and the area is associated with the at least one display criterion, such that each of the POI with which an area is associated will share the same criteria for display with respect to that particular area. This provides a simple and effective technique for the user to customise display of POI. For example, the user may set up multiple predefined areas with associated POI and display criteria for use in different circumstances. For example, a nurse may set up an area, add POI to the area in the form of locations of a set of patients whose homes to be visited, and associate the area with a criterion that the apparatus must be in a work mode of operation for this set of POI to be displayed. The user may set up a second area including POI in the form of tourist attractions, and associate this area with a criterion that the apparatus must be in a holiday mode of operation for the POI associated with this area to be displayed.

In accordance with the invention, a location criterion is also taken into account when determining whether to select the POI with which a given area is associated for display. The location criterion is considered by reference to the predefined geographic area rather than locations of individual POI. For example, the location criterion may require that a given e.g. current or user specified location is within, or within a given range of the predefined area. Thus, both the location and other display criterion or criteria are assessed by reference to the area, and hence the set of POI associated therewith, rather than individual POI.

In accordance with the invention, each predefined geographic area is associated with one or more points of interest i.e. a set of one or more points of interest. Preferably a plurality of points of interest are associated with each predefined geographic area ("the area"). References to the "area" herein should be understood as referring to "the predefined geographic area" unless otherwise stated.

Each predefined area is a geographic region specified in advance, preferably by a user, as described below. In embodiments the predefined area is a predefined area of a digital map. The predefined area may be of any size or shape. The predefined area could be a given street, or part of a street, a given town, a state, or any other prespecified region. The predefined area will generally be an extended geographic region rather than a point location in order to allow one or more POI included in the region to be associated therewith.

In accordance with the invention, the or each point of interest associated with a given predefined area is selected for display only when the location criterion and the at least one display criterion associated with the area are each met. It will be appreciated that the POI associated with an area is/are selected for display only when the criteria are simultaneously met.

In accordance with the invention the method comprises determining whether a location criterion with respect to a given one of the one or more predefined areas is met, and determining whether the at least one display criterion associated with the predefined area is met. Thus, it is determined whether at least two different criteria, including a location criterion and a further display criterion associated with the predefined area are met. The system may comprise means for carrying out such a step. This step may be carried out by the navigation apparatus, and the or a processor may then be arranged to carry out the step. The processor is arranged to carry out such a step. The one or more POI associated with the area are selected for display only when both the location criterion and each of the at least one display criteria associated with the area are met. Where multiple display criteria are associated with a given predefined area, each of the display criteria must be met in order for the POI to be selected for display. Accordingly in some embodiments the method may comprise not selecting the one or more POI associated with a given predefined area for display when the location criterion is met and at least one display criterion associated with the area is not met. In embodiments of the invention where a plurality of display criteria are associated with each predefined area, the POI are not selected for display when any one of the plurality of display criteria is not met.

It will be appreciated that the display criterion or criteria is/are a non-location based criterion. References to the at least one display criterion associated with the predefined area will therefore be understood as referring to at least one display criterion which is different to the location criterion, i.e. which is a non location based criterion. Each display criterion is a predefined criterion.

In embodiments, the method involves the step of the navigation apparatus enabling the display of the or each point of interest associated with a given predefined area when the location criterion and the at least one display criteria associated with the area are all met, and the processor is arranged to carry out such a step. The step of selecting the or each point of interest for display thus comprises making the or each point of interest available for display. In effect, the or each point of interest is switched on when the criteria are met. This is in contrast to prior art methods in which points of interest will automatically be switched on whenever a location criterion only is met. In such prior art techniques, the user must manually switch off those points of interest which are not relevant at a given time or circumstance.

The present invention allows a user to avoid having to carry out the selection step manually, by enabling the display of only those points of interest associated with an area meeting at least one predefined display criterion in addition to a location criterion. As set out below, the predefined display criterion or criteria is preferably a user specified criterion, allowing the user to readily customise display of POI.

In embodiments of the invention the step of selecting the or each point of interest associated with a given predefined area for display is carried out automatically when the location and display criteria are met, and the processor is arranged to automatically carry out this step when the criteria are determined to be met. This enables the selection of the points of interest for display without the user needing to intervene in contrast to prior art techniques in which the user must select categories of points of interest to be displayed. After the or each display criterion has initially been set up for an area, the apparatus will subsequently automatically select POI associated with the area for display when the or each display criterion and location criterion are met.

The method may comprise the step of the navigation apparatus displaying the or each point of interest selected for display on a digital map on the display of the apparatus, and the processor may be arranged to carry out such a step on a digital map displayed on the display of the navigation apparatus. The method may further comprise accessing digital map data and displaying a digital map on a display of the navigation apparatus, and the processor may be arranged to carry out such a step. The digital map data may be accessed in any manner, and may be stored remotely or locally. In embodiments the apparatus comprises a memory storing the digital map data.

In some embodiments the method comprises the step of the navigation apparatus automatically displaying the or each point of interest associated with the predefined area and selected for display when the criteria are met, and the processor is arranged to carry out such a step. In other embodiments the method comprises the step of displaying the point or points of interest selected for display only upon intervention by a user. For example, the user may be presented with a list of points of interest associated with the area which have been selected for display when the criteria have been met, enabling the user to make a further selection from among the selected points of interest before the points are displayed.

It will be appreciated that in accordance with the invention all of the POI associated with the predefined area are selected for display by the navigation apparatus when the location and display criteria are met, and in embodiments, displayed by the apparatus when each of the criteria are met. Thus, the POI are switched on, or their display enabled, as a set. In some embodiments the method may further comprise displaying the one or more points of interest selected for display on a digital map on a display of the navigation apparatus, and, switching off the display of one or more of the displayed points of interest in accordance with a selection made by the user. The point or points of interest selected by the user to be switched off may form a subset of the points of interest associated with the area and initially selected for display (and displayed). Thus in these embodiments, although initially all POI associated with an area are displayed, the user has the ability to selectively switch off the display of POI if desired on an individual basis. For example, the user may choose to switch off an individual POI after they have visited it. In embodiments the method involves the navigation apparatus displaying the POI associated with the area when the criteria are met, and causing the display of one or more of the displayed POI to be switched off in accordance with a selection made by the user. The processor may be arranged to carry out such a step. The user may make the selection by making an appropriate input to the navigation apparatus. Thus the points of interest may be switched off in response to a user input.

Regardless of the manner in which the POI are displayed, in some embodiments the apparatus may be arranged to navigate to or via one or more of the displayed POI e.g. in response to a selection of a POI by a user. In accordance with some embodiments of the invention the navigation apparatus may be arranged to receive from a user a selection of a displayed POI, and to calculate a route to or via the selected POI. The method may comprise the navigation apparatus receiving such a selection from a user, and calculating a route. The method may further comprise automatically guiding the user to or via the POI using the calculated route, and the processor may be arranged to carry out such a step. In some embodiments the apparatus may be arranged to calculate an itinerary visiting or going via a plurality of the displayed POI. The itinerary may include all displayed POI or a subset of displayed POI selected by a user. The apparatus may be arranged to automatically guide the user to visit or go via each of the POI included in the itinerary.

It will be appreciated that the POI associated with the predefined area will be POI having a geographic location e.g. location coordinates within the predefined area. The predefined area will typically cover a geographic area of an extent greater than the associated POI.

The location criterion may act in the same manner as in conventional arrangements, to ensure that only POI encompassed by an area with a location relevant e.g. in proximity to a given location e.g. a current location or a specified location are selected for display. The location criterion is a criterion specifying a location requirement which must be met in order for the POI associated with the predefined area to be selected for display. The location criterion may be user specified.

The location criterion may be associated with the predefined area, and the method may comprise a step of associating the location criterion with the predefined area. In such embodiments, at least two different criteria are associated with the area specifying conditions to be met in order for the one or more POI associated with the predefined area to be displayed, the criteria being the location criterion and the at least one display criterion. Such embodiments would enable different location criteria to be associated with different predefined areas. However, it will be appreciated that the location criterion need not be associated with the area. The location criterion may be a criterion which is generally applied by the apparatus in relation to any predefined area, and may therefore be set on manufacture, or according to more general settings. The association of the POI with the predefined area means that the location criterion can simply be based upon whether a given location is within the area, or within a given range of the area. Thus the apparatus may determine that the location criterion is met when a predefined area is found to be within a given vicinity of the given location, rather than considering the locations of individual POI. The act of setting the predefined area may therefore indirectly set the location criterion.

In embodiments the location criterion is a requirement in relation to the position of a given location relative to the predefined area. The given location is preferably a GPS location. The requirement is a condition to be met by the position of the given location relative to the predefined area in order for the one or more points of interest with which the area is associated to be displayed. The criterion may require that the given location is within the predefined area, or within a specified range of the predefined area, and the step of determining whether the location criterion is met may comprise determining whether the given location is within, or within a specified range of the predefined area. The processor of the navigation apparatus may be arranged to carry out such a step. The range may be defined by reference to the boundary of the area, or a given location within the area.

The given location is preferably a current location i.e. a current location of the navigation apparatus and hence user. It is envisaged that the given location may be another specified location, preferably a user specified location. For example, the user may specify a given location such as a holiday destination or their home address in order to see POI in that vicinity. Such an option may involve entering a POI viewing mode of the apparatus. The user may be planning a trip to a given region, and may specify a location of interest in the region to determine which points of interest are present nearby. The method may therefore comprise the navigation apparatus receiving an indication of the specified location from a user, and the apparatus may be arranged to receive such an indication.

In embodiments in which the location criterion is associated with the predefined area, it will be appreciated that where multiple predefined areas are set up, each may be associated with different location criteria. For example, some areas may be associated with a criterion that the given e.g. location must be within the area for POI to be selected for display, and others may require only that the given location is within 500m of a boundary of the area. The location criterion may be user specified. It will be appreciated that even if the location criterion is not user specified .e.g. if it is preset for all predefined areas, the user may be able to effectively determine a location criterion by choosing the extent of an area associated with given POI appropriately, and may therefore indirectly set different location criterion for different areas. For example, if the criterion requires that a POI is within a given predefined area, setting the predefined area larger will result in a less stringent location criterion with respect to a POI associated with the area.

The at least one display criterion associated with the or each predefined area is a further criterion in that it is additional to the location criterion. There may be only one display criterion associated with the or each area. In other embodiments a plurality of display criterion are associated with the or each area. The at least one display criterion is/are predefined criteria associated with the predefined area. The at least one display criterion are non location based criterion. The at least one display criterion may be user specified or prespecified. By prespecified it is meant that the criteria may be set e.g. during manufacture, or according to other settings which are not set by a user. Preferably the at least one display criterion or criteria are user specified. Where a plurality of display criteria are associated with an area, preferably the criteria are different criteria i.e. different to one another. The criteria may be user specified or prespecified, but are preferably each is user specified.

The display criterion or criteria relate to the set i.e. group of POI associated with the area. Thus the same criterion governs the display of all POI associated with the area. The POI may be different in category or type. The display criterion acts as an umbrella criterion relating to the display of all criteria, and therefore allows the display of potentially disparate POI to be linked in a manner which was not possible with prior art techniques.

The one or more display criteria are preferably extrinsic to the POI. Thus they do not relate to inherent properties of the POI e.g. category, type of POI etc. In embodiments the at least one display criterion do/does not include a criterion regarding a category of the or each POI associated with the area. The POI associated with a given area may include POI from different categories. When the display and location criteria are met, the POI from different categories will then be displayed.

The at least one display criteria includes criterion imposing a requirement relating to the circumstances of use of the display apparatus which must be met in order for the POI to be displayed e.g. state of operation, time of operation etc.

The at least one display criteria includes a criterion relating to a state of operation of the apparatus. For example, the criterion may require that the apparatus is in a given state of operation in order for the POI associated with the area to be selected for display. The state is a user selectable state. Examples of states of operation include a holiday state, work state or leisure state. The state is a general state not directly linked to the display of individual POI or categories of POI. In other words, the state of operation is a mode of operation of the apparatus.

Additionally, the at least one display criteria includes a temporal criterion. The temporal criterion imposes a requirement in relation to a given time. The given time is preferably a current time. However, as described by reference to the location criterion, the given time could be a specified, preferably user specified time, other than a current time. For example, a user may specify a particular time when in a POI viewing mode in order to see POI which would be displayed at that time. For example, a user may specify a time when they intend to make a trip in order to see the POI relevant at that time. The temporal criterion may require that a given time matches one or more of a prespecified time of day, week, month or year, and/or is within a prespecified range or pattern of hours, minutes, days, months and/or seasons. Thus the POI associated with the area may only be displayed when the given e.g. current time matches the temporal criterion. By way of example, an area containing beach POI may only be displayed when the given e.g. current time meets a display criterion requiring that it is summer. It will be appreciated that in these embodiments, the present invention effectively provides a way of allowing the apparatus to determine which POI are relevant for display under given conditions, without the user needing to select/deselect individual POI on each occasion. The apparatus provides an automatic selection of POI by reference to the prespecified criteria, which may take into account factors relating to the operation and circumstances of use of the apparatus to determine whether POI are to be displayed. Thus the user need not, on each occasion, specifically specify whether an area is to be active, but the apparatus infers this from the circumstances of use of the apparatus. The method provides a way of indirectly determining when the area is of relevance.

It will be appreciated that one or more display criteria may be associated with a given predefined area. As well as an apparatus state related criterion, a temporal criterion is additionally associated with a given area. In embodiments a plurality of different prespecified, preferably user specified display criteria are associated with the predefined area, each criterion specifying a condition to be met in order for the POI associated with the area to be displayed. In embodiments all display criteria associated with the area must be met in addition to the location criterion in order for display of associated POI to be enabled.

It will be appreciated that the one or more display criteria associated with the area effectively define the conditions under which the area is deemed to be active. Thus when the display criteria are met, and the location criterion met, the POI are selected for display. For example, a temporal criterion may specify that the POI associated with the area are only to be displayed at weekends. Thus the area is only active at these times.

Alternatively or additionally, the method may further comprise associating a group name with the area, and the display criterion may impose a requirement in relation to the group name. For example, a user may associate one or more POI with an area, and then associate the area with a group name. The group name may be a group name for the POI associated with the area. For example, the POI may be POI which the user considers to be sport related, and the user may then select a group name of "sport". Other examples of group names might be "fun", or "family". The display criteria set may then require that display of POI associated with predefined areas having the group name associated with the area has been enabled. For example, the criterion may require that the apparatus has been set to enable display of POI associated with areas having a group name associated with the predefined area.

In embodiments the apparatus may be configured to permit the user to override the location and display criteria to deactivate or activate a predefined area to prevent or cause the POI associated with the area to be selected for display, and may be arranged to receive an input from a user overriding the criteria. The method may comprise the apparatus receiving such an input from a user. In this way, the user may specify that an area is not active, such that even if the criteria are met, the POI associated with the area will not be displayed, or conversely may activate an area such that the POI will be displayed even if the criteria are not met. In embodiments the display and location criteria may only be overriden by user intervention.

According to the invention at least one predefined geographic area is associated with one or more POI and at least one display criterion. In preferred embodiments a plurality of predefined geographic areas are each associated respectively with one or more POI and at least one display criterion. In other words, each area is associated with a respective set of POI. Where multiple areas are set up and associated with POI and display criteria in this manner, each further predefined area, and its associated POI and display criteria may be in accordance with any of the embodiments described above.

In preferred embodiments, whether one or more predefined area is set up, each predefined geographic area is a user specified area. In preferred embodiments each predefined geographic area is a different geographic area. In other words the extent of each area is different. The different predefined areas may or may not overlap. The or each predefined area may be a sub region of a geographic area. The predefined area is a selected area from a geographic region. The predefined area is defined in advance by a user.

In some embodiments each predefined area is associated with a different set of one or more POI and/or at least one different display criterion to one or each of the other predefined areas. It will be appreciated, however, that the same individual POI may be associated with more than one different predefined area, which may have different criteria specifying the condition under which the POI may be displayed. For example, a user may visit a civic centre for work purposes, but at other times may visit it to attend a concert event. Thus the civic centre could be associated with a first area associated with a work criterion, and also a second area associated with a leisure criterion. The at least one criterion associated with each area is preferably a user specified criterion.

In embodiments the method further comprises the apparatus identifying at least one predefined area having one or more POI and at least one display criterion associated therewith, and selecting the one or more POI associated with the predefined geographic area for display when the location and display criteria are met for the area. The apparatus may be arranged to carry out such a step. In embodiments of the invention, the method may comprise the apparatus accessing stored data relating to the predefined area and the one or more POI and the at least one display criterion associated therewith. The processor may be arranged to access the data. The stored data may be data stored in a memory of the navigation apparatus or accessible to the navigation apparatus. Thus the data may be accessed by the apparatus in any manner, and may involve the use of a combination of techniques. For example, it is envisaged that the data may be stored remotely and be accessible by the processor of the navigation apparatus The data may be accessed using any suitable communications link. The information may be held on a remote server. The processor may be arranged to download the data. Where multiple predefined areas are set up, the apparatus may be arranged to determine when a given one of the predefined areas meets a location criterion with respect to a given e.g. current or user specified location, and determine whether the at least one display criterion is met.

In embodiments the step of associating the POI and at least one display criteria with the or each predefined area comprises associating data relating to the one or more POI and data relating to the at least one display criterion data with data relating to the predefined area for the or each predefined area.

In embodiments the method comprises storing data relating to the or each predefined area respectively in association with data relating to the one or more POI and at least one display criterion associated with the predefined area. In embodiments in which data is stored, the data may be stored so as to be accessible to the navigation apparatus or may be stored by a memory of the navigation apparatus. It will be appreciated that the data identifying each predefined area, the POI and the display criterion may be stored in any manner, and need not be stored together. The present invention envisages that an association between the data relating to the predefined area and the POI and display criteria may be formed in any manner which enables the POI and the display criteria associated with an area to be determined by a navigation apparatus when the predefined area is identified.

In accordance with the invention, a given predefined area and the association between the area and the POI and at least one display criterion may be set up in any manner. In some preferred embodiments the method further comprises the step of receiving, for each predefined area, an indication of the predefined area, the one or more POI to be associated with the area, and the at least one display criterion to be associated with the area. The step of receiving is preferably a step of the navigation apparatus receiving the indication or indications. The processor may be arranged to receive such indications. The indication of any or all of the area, POI and display criterion is preferably made by a user, and the method may then comprise receiving an indication of any or all of the predefined area, the one or more POI and/or the at least one display criterion from a user for each of the one or more predefined areas. In embodiments, any or all of the indications made by the user are preferably made via the navigation apparatus. The location criterion may be indicated in the same manner as the display criterion. The method further comprises, for the or each predefined area, associating the indicated one or more POI and the at least one indicated display criterion with the predefined area. The step of associating may be carried out by the navigation apparatus i.e under the control of the user.

Thus, in preferred embodiments any or all of the or each predefined area, and the one or more POI and the at least one display criterion associated with each predefined area are user specified. The location criterion may also be user specified. The step of associating the one or more POI and/or the at least one display criterion with a predefined area is preferably carried out on the basis of one or more indications supplied by a user, and preferably by the navigation apparatus. However it is envisaged that the user could set up the areas other than by using the navigation apparatus, e.g. by using a different navigation apparatus, or a PC.

In embodiments in which a user indicates POI to be associated with the predefined area, the points of interest may be obtained in any manner. The POI may include POI selected by a user from a list of available POIs, a category or categories of available POI or may be user created POI. Similarly the at least one display criterion may be indicated in any suitable manner, and may be indicated using a menu based operation, or using any form of user input.

In any of the aspects and embodiments described, the navigation apparatus preferably comprises a user interface operable by a user to enable the user to interact with the apparatus. The user interface is preferably arranged to allow a user to provide any or all of an indication of a predefined area, an indication of the one or more POI to be associated with the area, and the display criterion to be associated with the predefined area.

The user interface may be of any suitable type. The user interface may enable a user to provide inputs to the apparatus in the form of touch based inputs, keystrokes, voice commands and combinations thereof. Preferably the display of the navigation apparatus comprises a user interface in the form of a touch screen, and the user may provide inputs to the apparatus via the touch screen.

In preferred embodiments the or each predefined area is indicated by a user on a digital map displayed by the apparatus. For example a predefined area may be indicated by a user specifying a centre point and a range that the area is to cover about the centre point. The user may drag out a boundary to a desired size. The user may indicate the area using one or more touch based gestures. The user may indicate the area directly or indirectly on the digital map. For example a cursor based operation may be used. Some suitable techniques are described in the copending PCT/EP2010/064151 filed on 24 September 2010. In some preferred embodiments the display is a touch screen to enable the user to provide touch based inputs. The user may then specify the predefined area using one or more touch inputs on the touch screen. The or each predefined area is preferably a sub region of a given geographic area. Thus in embodiments the step of defining the predefined area comprises selecting a sub region of a geographic area e.g. represented by a digital map.

The method may further comprise associating a name with the predefined area having one or more POI and at least one display criterion associated therewith. The name may be indicated by a user. The name identifies a given predefined area. For example, the user who needs to visit stores for work may set up an area with the name of a given store, and add branches of that store to the area, setting a display criterion to require that it must be within working hours for the POI to be displayed. The name of the area provides an easy way for the user to identify the area and change its attributes etc as needed, or even share the area. The name will enable the user to identify that area from other areas which have different POI sets and/or display criteria associated therewith. The name may help to identify the area in order to modify its associated POI and/or display criteria, or for other purposes e.g. to send the area to another apparatus, save the area etc.

While it is preferred that the predefined area, and the POI and display criteria to be associated with the area are user specified, it is envisaged that data identifying a predefined area having POI, and optionally display criteria already associated therewith could be made available to the apparatus e.g. downloaded, or otherwise obtained from a given source, or, alternatively could be preset when the apparatus is supplied to a user. For example, data relating to predefined geographic areas having POI preassociated therewith could be sold e.g. by producers of travel guides, enabling a user to download them to their navigation device. In other arrangements data relating to predefined geographic areas having POI associated therewith could be received by a navigation device from another navigation device e.g. after being recommended by another user. Thus the step of associating the predefined area with the one or more POI, and optionally the display criteria, may not be carried out using the navigation apparatus. The steps of associating the POI and/or display criteria with the area may be carried out using another navigation apparatus or another part of a system. Thus the method may be carried out over a distributed system with the associating steps being carried out remote from the navigation apparatus. The at least one display criterion and optionally the location criterion may equally be prespecified and not user specified. However, whether or not the POI are associated with the area by a user, it is preferred that at least the display criteria are associated with the predefined area or areas under the control of the user, i.e. that they are user specified, and the user preferably carries out the step of associating the display criteria with the predefined area using the navigation apparatus. This enables the user to customise display of the POI.

Accordingly, in some embodiments, the method may comprise a step of providing to the navigation apparatus data relating to the or each predefined area (already) having the one or more POI associated therewith, and optionally the at least one display criterion associated therewith. The method may comprise the step of the navigation apparatus receiving data relating to the or each predefined area having the one or more POI associated therewith, and optionally the at least one display criterion associated therewith, and the processor may be arranged to receive such data. The step of providing may be carried out by a user. The location criterion may be provided in a similar manner.

Where multiple predefined geographic areas are set up, the method of setting up a predefined area with associated POI and display criteria may be repeated for further predefined areas. Alternatively any combination of the above and other techniques may be used. For example some areas may be defined by a user, and others downloaded from a source having the POI and display criteria already associated therewith.

It is envisaged that a user may set up a predefined area with associated POI and at least one display criterion, and then recommend the area with its associated POI and optionally display criterion to another user. This may be achieved using techniques described in the copending PCT/EP2009/067454. Rather than sending or receiving individual recommended POI via the navigation apparatus as envisaged in this copending application, the user would instead send or receive a predefined geographic area having its associated POI and optionally the at least one display criterion. The display criterion or criteria are only optionally sent with the predefined area and POI, as it is envisaged that the user receiving the area and its POI may wish to define their own display criteria for the area.

It will be appreciated that any of the further aspects of the invention may include any or all of the features of the invention described in relation to any other aspects and embodiments of the invention to the extent they are not mutually inconsistent therewith.

As used herein, a point of interest may be any location which may be of interest or utility to a user. The point of interest is typically a specific point location. For example, the point of interest may be a gas station, hospital, bank, restaurant, tourist attraction or the like. The point of interest may be a user specified or predefined point of interest. A point of interest may be a point of general interest, such as an attraction, or a point of interest only to a specific user, e.g. the house of a relative. A navigation device may enable a user to enter a new point of interest, for example if they pass a location which they consider to be of interest. A point of interest could be a permanent or temporary location of interest. For example, the point of interest could be a location where an event, such as a fair, is taking place. The POI could be the location of a person e.g. a contact.

It is believed that the concept of displaying POI only when both a location criterion and an additional display criterion are met is advantageous in its own right.

It will be appreciated that any of the further aspects of the invention may include any or all of the features of the invention described in relation to any other aspects and embodiments of the invention to the extent they are not mutually inconsistent therewith. For example the state of operation and the temporal criterion may be in accordance with any of the embodiments described above.

The principles of the present invention are applicable to any form of navigation apparatus. While the invention has been described by reference to navigation apparatus, it is envisaged that it may be implemented in relation to mapping apparatus. The mapping apparatus may or may not provide route planning ability and/or navigation ability.

One particular area of utility is in relation to portable navigation devices (PND). In embodiments, therefore, the navigation apparatus is an apparatus of a portable navigation device (PND). In accordance with a further aspect, the navigation apparatus referred to in the aspects and embodiments of the invention above is a portable navigation device (PND). Accordingly, in embodiments of the invention, the method is a method of selecting one or more POI for display by a portable navigation device.

The invention is also applicable to navigation apparatus which is provided as part of an integrated navigation system. For example the apparatus may form part of an in-vehicle integrated navigation system. In accordance with another aspect of the invention, the navigation apparatus described herein may form part of a navigation system. The navigation system may be an integrated in-vehicle navigation system. Accordingly, in embodiments of the invention, the method is a method of selecting one or more POI for display by a navigation apparatus of a navigation system.

Regardless of its implementation, a navigation apparatus used in accordance with the present invention may comprise a processor, memory, and digital map data stored within said memory. The processor and memory cooperate to provide an execution environment in which a software operating system may be established. One or more additional software programs may be provided to enable the functionality of the apparatus to be controlled, and to provide various other functions. A navigation apparatus of the invention may preferably include GPS (Global Positioning System) signal reception and processing functionality. The apparatus may comprise one or more output interfaces by means of which information may be relayed to the user. The output interface(s) may include a speaker for audible output in addition to the visual display. The apparatus may comprise input interfaces including one or more physical buttons to control on/off operation or other features of the apparatus.

In other embodiments, the navigation apparatus may be implemented by means of an application of a processing device which does not form part of a specific navigation device. For example the invention may be implemented using a suitable computer system arranged to execute navigation software. The system may be a mobile or portable computer system e.g. a mobile telephone or laptop, or may be a desktop system.

Advantages of these embodiments are set out hereafter, and further details and features of each of these embodiments are defined in the accompanying dependent claims and elsewhere in the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a schematic illustration of a Global Positioning System (GPS);
Fig. 2 is a schematic illustration of electronic components arranged to provide a navigation device;
Fig. 3 is a schematic illustration of the manner in which a navigation device may receive information over a wireless communication channel;
Figs. 4A and 4B are illustrative perspective views of a navigation device; Figs. 5a to 5i are illustrative screenshots from a TomTom GO 950 LIVE PND for a destination input process;
Figure 6 is a flowchart illustrating an exemplary method in accordance with an embodiment of the invention.

### Detailed Description of Preferred Embodiments

Preferred embodiments of the present invention will now be described with particular reference to a PND. It should be remembered, however, that the teachings of the present invention are not limited to PNDs but are instead universally applicable to any type of processing device that is configured to execute navigation software so as to provide mapping, or route planning and navigation functionality. It follows therefore that in the context of the present application, a navigation device is intended to include (without limitation) any type of mapping, or preferably route planning and navigation device, irrespective of whether that device is embodied as a PND, a navigation device built into a vehicle, or indeed a computing resource (such as a desktop or portable personal computer (PC), mobile telephone or portable digital assistant (PDA)) executing mapping, route planning or navigation software.

It will also be apparent from the following that the teachings of the present invention even have utility in circumstances where a user is not seeking instructions on how to navigate from one point to another, but merely wishes to be provided with a view of points of interest in the vicinity of a given location, or a view of a given location. In such circumstances the "destination" location selected by the user need not have a corresponding start location from which the user wishes to start navigating, and as a consequence references herein to the "destination" location or indeed to a "destination" view should not be interpreted to mean that the generation of a route is essential, that travelling to the "destination" must occur, or indeed that the presence of a destination requires the designation of a corresponding start location.

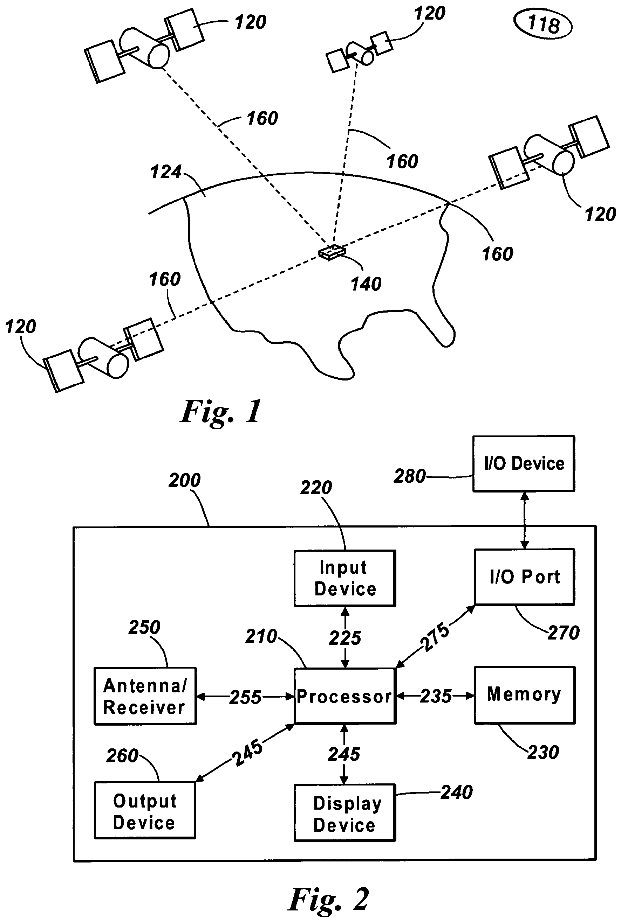

With the above provisos in mind, Fig. 1 illustrates an example view of Global Positioning System (GPS), usable by navigation devices. Such systems are known and are used for a variety of purposes. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

Figure 2 is an illustrative representation of electronic components of a navigation device 200 according to a preferred embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilised to input information; and the display screen 240 can include any type of display screen such as an LCD display, for example. In a particularly preferred arrangement the input device 220 and display screen 240 are integrated into an integrated input and display device, including a touchpad or touchscreen input so that a user need only touch a portion of the display screen 240 to select one of a plurality of display choices or to activate one of a plurality of virtual buttons.

The navigation device may include an output device 260, for example an audible output device (e.g. a loudspeaker). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operably coupled to a memory resource 230 via connection 235 and is further adapted to receive/send information from/to input/output (I/O) ports 270 via connection 275, wherein the I/O port 270 is connectible to an I/O device 280 external to the navigation device 200. The memory resource 230 comprises, for example, a volatile memory, such as a Random Access Memory (RAM) and a non-volatile memory, for example a digital memory, such as a flash memory. The external I/O device 280 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example.

Fig. 2 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 2 are powered by power sources (not shown) in a conventional manner. As will be understood by one of ordinary skill in the art, different configurations of the components shown in Fig. 2 are considered to be within the scope of the present application. For example, the components shown in Fig. 2 may be in communication with one another via wired and/or wireless connections and the like. Thus, the scope of the navigation device 200 of the present application includes a portable or handheld navigation device 200.

In addition, the portable or handheld navigation device 200 of Fig. 2 can be connected or "docked" in a known manner to a vehicle such as a bicycle, a motorbike, a car or a boat for example. Such a navigation device 200 is then removable from the docked location for portable or handheld navigation use.

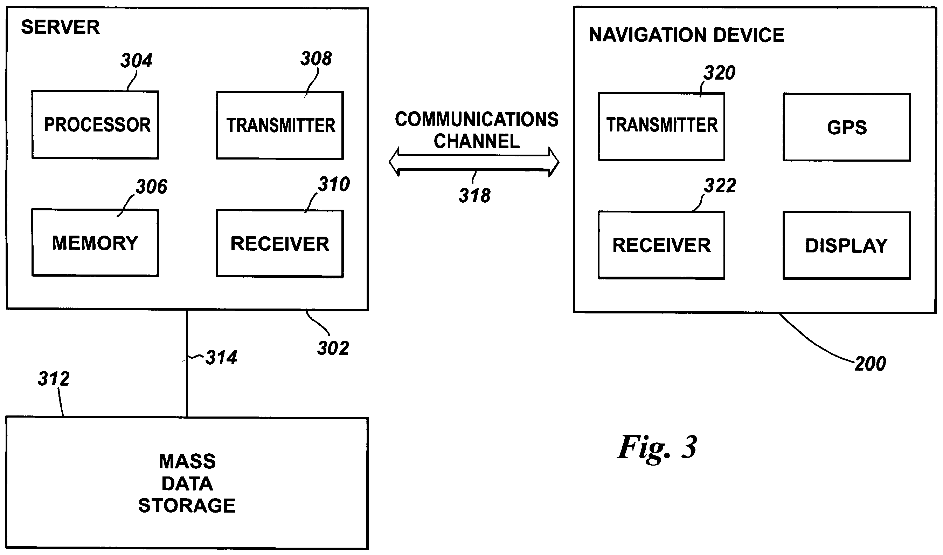

Referring now to Fig. 3, the navigation device 200 may establish a "mobile" or telecommunications network connection with a server 302 via a mobile device (not shown) (such as a mobile phone, PDA, and/or any device with mobile phone technology) establishing a digital connection (such as a digital connection via known Bluetooth technology for example). Thereafter, through its network service provider, the mobile device can establish a network connection (through the internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using an internet (such as the World Wide Web) for example, can be done in a known manner. This can include use of TCP/IP layered protocol for example. The mobile device can utilize any number of communication standards such as CDMA, GSM, WAN, etc.

As such, an internet connection may be utilised which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device, and eventually with the internet and server 302, via existing Bluetooth technology for example, in a known manner, wherein the data protocol can utilize any number of standards, such as the GPRS, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber Identity Module or SIM card), complete with necessary mobile phone technology and/or an antenna for example. As such, mobile phone technology within the navigation device 200 can similarly establish a network connection between the navigation device 200 and the server 302, via the internet for example, in a manner similar to that of any mobile device.

For GPRS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 3 the navigation device 200 is depicted as being in communication with the server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through communications channel 318, and includes processor, memory, etc. as previously described with regard to Fig. 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fibre optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The server 302 includes a remote server accessible by the navigation device 200 via a wireless channel. The server 302 may include a network server located on a local area network (LAN), wide area network (WAN), virtual private network (VPN), etc.

The server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the internet.

The navigation device 200 may be provided with information from the server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

As indicated above in Fig. 2, a navigation device 200 includes a processor 210, an input device 220, and a display screen 240. The input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 241, such as audio input/output devices for example.

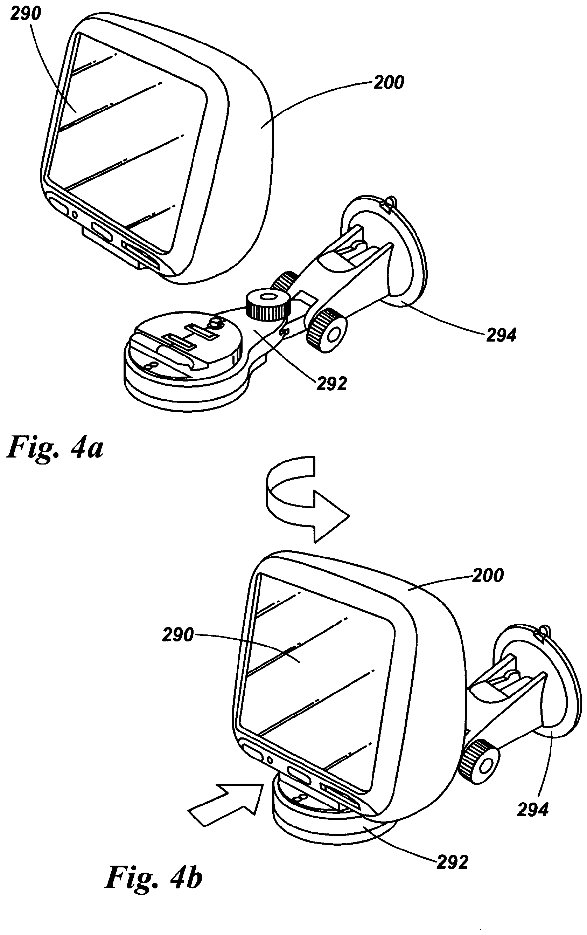

Figs 4A and 4B are perspective views of a navigation device 200. As shown in Fig. 4A, the navigation device 200 may be a unit that includes an integrated input and display device 290 (a touch panel screen for example) and the other components of fig. 2 (including but not limited to internal GPS receiver 250, microprocessor 210, a power supply, memory systems 230, etc.).

The navigation device 200 may sit on an arm 292, which itself may be secured to a vehicle dashboard/window/etc. using a suction cup 294. This arm 292 is one example of a docking station to which the navigation device 200 can be docked.

As shown in Fig. 4B, the navigation device 200 can be docked or otherwise connected to an arm 292 of the docking station by snap connecting the navigation device 292 to the arm 292 for example. The navigation device 200 may then be rotatable on the arm 292, as shown by the arrow of Fig. 4B. To release the connection between the navigation device 200 and the docking station, a button on the navigation device 200 may be pressed, for example. Other equally suitable arrangements for coupling and decoupling the navigation device to a docking station are well known to persons of ordinary skill in the art.

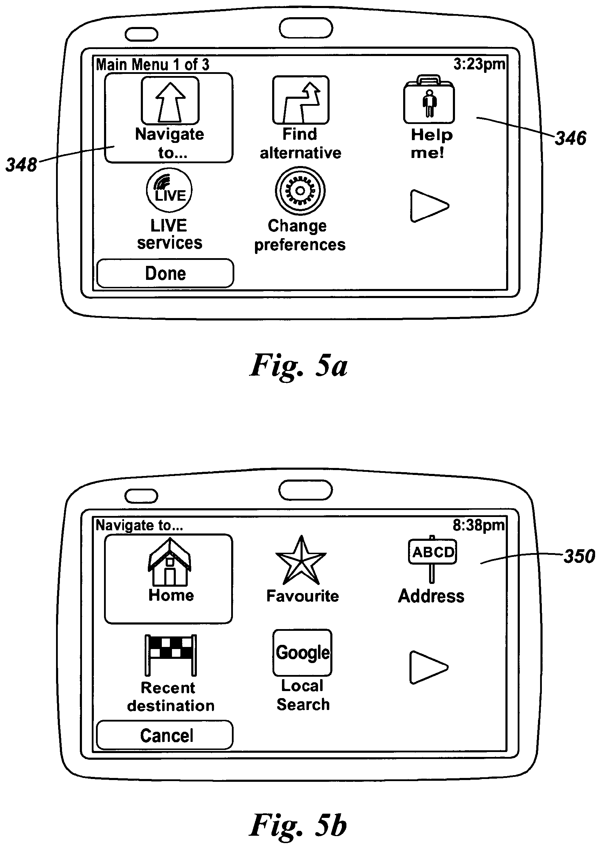

Referring now to Figs. 5a- i there is depicted a series of screenshots from a TomTom GO 950 LIVE navigation device. This model of TomTom PND has a touchscreen interface for displaying information to a user and for accepting input to the device from the user. The screenshots show an illustrative destination location input process for a user whose home location has been set to the offices in The Hague of the European Patent Office, and who wishes to navigate to a street address in Amsterdam, The Netherlands for which they know the street name and building number.

When this user switches on their TomTom PND, the device acquires a GPS fix and calculates (in a known manner) the current location of the PND. The user is then presented with a display showing in pseudo three-dimensions the local environment in which the PND is determined to be located, and in a region of the display below the local environment a series of control and status messages.

By touching the display of the local environment, the PND switches to display (as shown in Fig. 5a) a series of virtual buttons 346, 348 by means of which a user can, inter alia, input a destination that they wish to navigate to.

By touching the "navigate to" virtual button 348, the PND switches to display (as shown in Fig. 5b) a plurality of virtual buttons that are each associated with a different category of selectable destinations. In this instance, the display shows a "home" button that if pressed would set the destination to the stored home location. However, in this instance as the user is already at their home location (namely the EPO's offices in the Hague) selecting this option would not cause a route to be generated. The "favourite" button, if pressed, reveals a list of destinations that the user has previously stored in the PND and if one of these destinations is then selected the destination for the route to be calculated is set to the selected previously stored destination. The "recent destination" button, if pressed, reveals a list of selectable destinations held in the memory of the PND and to which the user has recently navigated. Selection of one of the destinations populating this list would set the destination location for this route to the selected (previously visited) location. The "local search" button, if pressed, allows the user to carry out a search for given items e.g. shops, services etc in the local area, or an area local to a given destination, using the Google local search service. The "arrow" shaped virtual button opens a new menu of additional options, and the "address" button 350 commences a process by which the user can input the street address of the destination that they wish to navigate to.

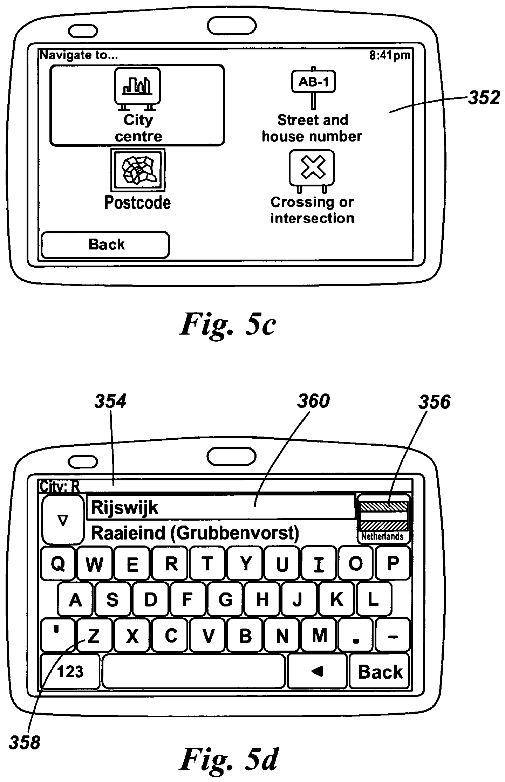

Since the user, in this example, knows the street address of the destination that they wish to navigate to, it is assumed that this "address" button is operated (by touching the button displayed on the touchscreen), whereupon (as shown in Fig. 5c) the user is presented with a series of address input options - in particular for address input by "city centre", by "postcode", by "crossing or intersection" (for example a junction of two roads) and by "street and house number".

In this example the user knows the street address and house number of the destination and hence selects the "street and house number" virtual button 352 whereupon the user is then presented, as shown in Fig. 5d, a prompt 354 to enter the name of the city that they wish to navigate to, a flag button 356 by means of which the user can select the country in which the desired city is located, and a virtual keyboard 358 that may be operated by the user, if necessary, to input the name of the destination city. The PND therefore additionally provides the user with a list 360 of selectable cites.

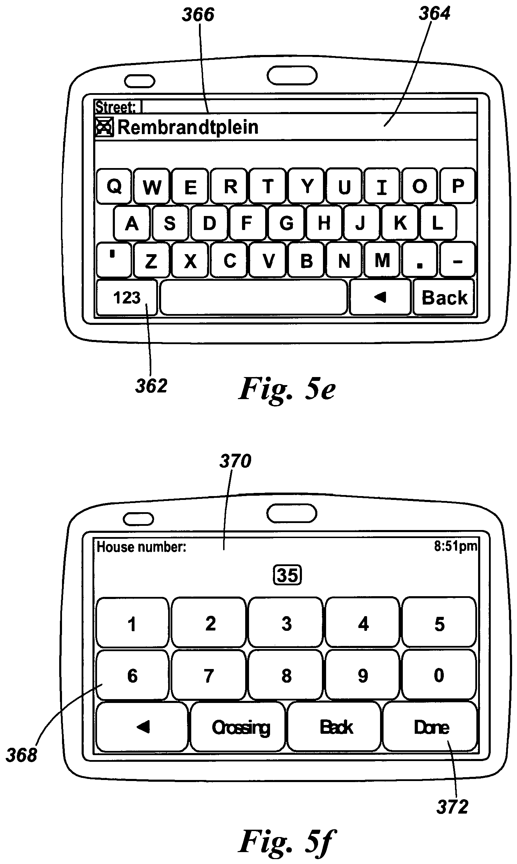

The user in this instance wishes to navigate to Amsterdam, and on selection of Amsterdam from the list 360 (involving scrolling through the list from the "R" entries) the PND displays, as shown in Fig. 5e, a virtual keyboard 362 by means of which a user can input street names, a prompt 366 for entry of a streetname and, in this instance, as the user has previously navigated to a street in Amsterdam, a list 364 of selectable streets in Amsterdam.

In this example the user wishes to navigate to the street, Rembrandtplein, that they have previously visited and so selects Rembrandtplein from the displayed list 364.

Once a street has been selected, the PND then displays a smaller virtual keypad 368 and prompts the user, by means of prompt 370, to enter the number of the house in the selected street and city that they wish to navigate to. If the user has previously navigated to a house number in this street, then that number (as shown in Fig. 5f) is initially shown. If, as in this instance, the user wishes to navigate to No. 35, Rembrandtplein once again, then the user need only touch a "done" virtual button 372 displayed at the bottom right hand corner of the display. If the user should wish to navigate to a different house number in Rembrandtplein, then all they need do is operate the keypad 368 to input the appropriate house number.

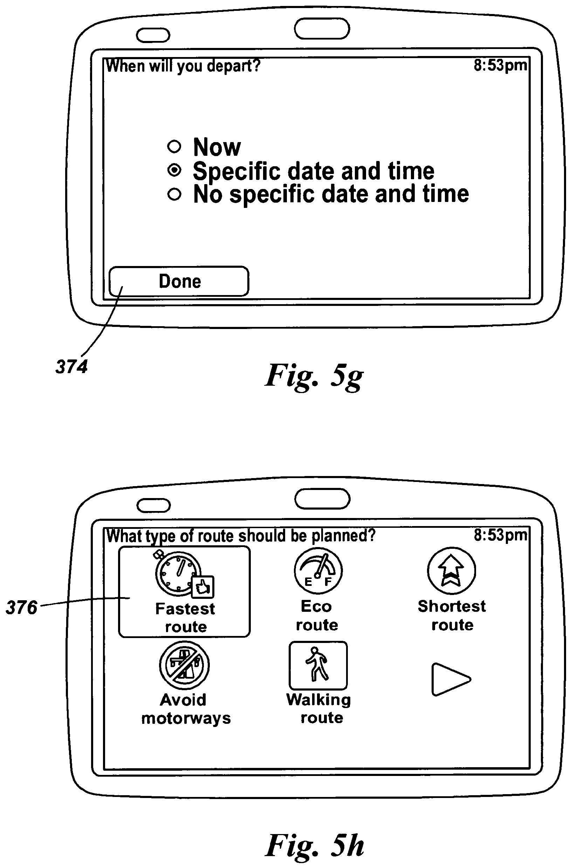

Once the house number has been input, the user is asked in Fig. 5g, whether they wish to depart, now, at a specific date and time or at no specific date and time. In this instance the user is not concerned about leaving at a particular time and hence selects the "no specific date and time" option and presses the "done" virtual button 374.

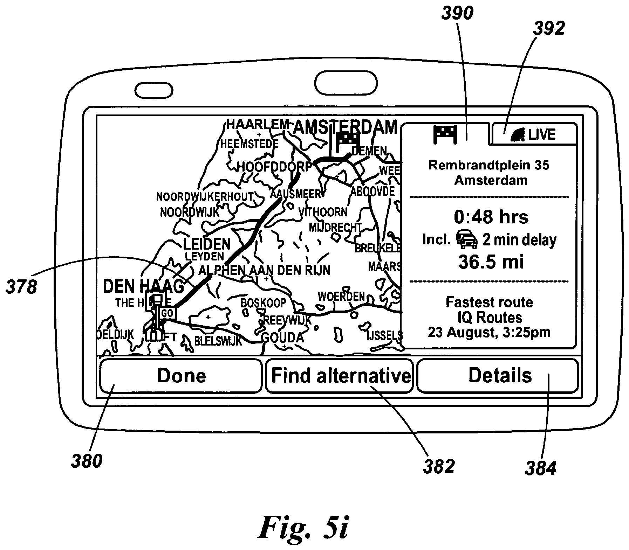

Selecting the "done" button 374 causes the PND to display a further set of virtual buttons as shown in Figure 5h offering options as to the type of route the user wishes to calculate, for example the fastest route, an eco route, the shortest route, a route avoiding motorways, a walking route, or further options accessed by pressing the arrow shaped virtual button. In this case, the user selects the fastest route using button 376. This causes the PND to calculate a route between the current location and the selected destination and to display that route 378, as shown in Fig. 5i, on a relatively low magnification map that shows the entire route. The user provided with a "done" virtual button 380 which they can press to indicate that they are happy with the calculated route, a "find alternative" button 382 that the user can press to cause the PND to calculate another route to the selected destination, and a "details" button 384 that a user can press to reveal selectable options for the display of more detailed information concerning the currently displayed route 378. The display includes a summary tab 390 providing a summary of the route information, and a further traffic tab 392 which the user may select to view detailed live traffic information for the route.

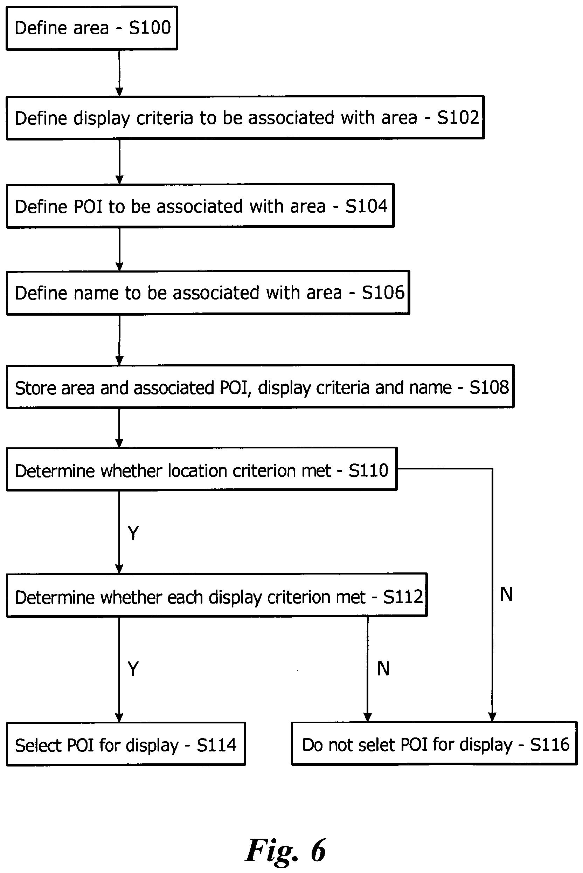

Figures 1-5i provide background information to facilitate understanding of the invention, and navigation apparatus in relation to which the present invention may be implemented. Some preferred embodiments of the invention will now be described by way of example only and with reference to Fig. 6.

The flowchart of Fig. 6 illustrates a series of steps which are carried out in order to implement methods in accordance with the present invention.

The setting up of predefined areas with associated POI and display criteria will first be described by reference to the flow diagram of Figure 6. In the flow diagram, steps 100 to 106 will normally be carried out by a user. Steps 108 to 116 will be carried out by the PND.

In a first step 100 a user defines a geographic area to provide a predefined area. This may be done in any manner. In some embodiments the user may define a given position, such as a current GPS position, a street or a city. The user may then define the range to be covered by the area, for example a whole street including the given position, a city or a range centered upon a given position. The user may define the geographic area directly on a display digital map, for example using a touch-based gesture or gestures. This may be done directly using a PND, or using associated equipment, such as PC etc. The apparatus may be arranged to provide a boundary centered on a given point specified by a user, which the user may drag out or otherwise resize to specify a desired predefined area. The predefined area is a sub region of a geographic region selected by the user e.g. a sub region of a displayed digital map.

Once the user has specified the desired predefined area, they define the display criteria to be associated with the area- step 102. One or more display criteria may be associated with the area. The display criteria are criteria which must be met in order for points of interest which will be associated with the area to be displayed by the PND. In other words, the display criteria define when the area is to be active. The display criteria includes a criterion which specifies a requirement in relation to a current time which must be satisfied in order for the POI to be displayed. For example the user may define that the area is to be active when the current time is between a range of hours corresponding to working hours.

The next step 104 is for the user to add points of interest to the defined area. The points of interest may be added from a list of available POIs, or may be selected as a category of available POIs. Alternatively, the user may specify their own POIs. Users may specify POIs as part of the area setup process, or the POIs may be user created POIs which were stored during previous trips. In this way, the points of interest form a set of points of interest associated with the predefined area. As the predefined area is also associated with the at least one display criterion, the criterion will govern the display of all of the POIs associated with the area.

The order of the steps of the method are not important. For example the points of interest may be associated with an area before or after the display criteria are associated with the area. The user may define the area, the POI and the display criterion using a user operable input means of the PND e.g. a touch screen. The user may be guided through the process using a user interface of the device e.g. using a series of menus. The step of associating the POI and the display criteria with the area is therefore carried out by the navigation device under the control of the user.

The user may also associate a name with the area, to facilitate identification of the area- step 106. For example the area name could be "office", "holiday", "beautiful views", or any other similar title which will enable the user to recall which set of POIs and display criteria are associated with the area.

The predefined area and the associated POI and display criterion are stored in the memory of the PND- step 108.

This process is repeated for any further areas which the user may wish to set up e.g. with different sets of POI and/or display criteria.

A location criterion may also be specified by the user which a given location must meet with respect to the predefined area in order for the POI to be displayed. This may be associated with the area and stored as with the display criterion. For example the user may specify that a current GPS location of the device or a specified location must be within the area. In some arrangements the location criterion may be preset, or may be set for all areas by the user rather than in relation to specific areas via the device settings. For example, the location criterion may always require that a given location is within the area for the POI to be displayed. The user may then set the size of a predefined area appropriately to trigger the display of POI once the location is within a given range of the POI. Setting a larger area with the same POI associated with it will result in a less stringent location criterion than if a smaller area is set including the same POI.

As the user drives around with the PND, when the current GPS location comes within a given range of a predefined area, or enters the area, a location criterion may be deemed to have been met. As mentioned above the location criterion i.e. the requirement to be met by the current location relative to the predefined area in order for the POI to be displayed may be set as desired, and may also be specified by the user in a setup process. Thus in step 110 the processor of the PND determines whether the location criterion is met.

Rather than immediately displaying the POIs associated with the area when the location criterion is met, the PND also determines whether each display criterion associated with the area by the user is met- step 112. For example when the display criterion requires that a current time must be within a given hour range, the PND may compare the current time to this "active" timeframe.

When both the location criterion and the additional display criterion are met, then the POI associated with the area are selected for display, and displayed on a digital map on the display of the PND- step 114. The user may then select a point of interest, and the PND may then calculate a route to the selected PND. Alternatively, the user may request that an itinerary is planned taking in all of the display POI. If any of the location criterion and the display criterion associated with the area are not met, the POI are not selected for display- S116.

In the above example, the user specified display criterion associated with the area is a temporal criterion. This criterion requires that the current time is a time within a specified range of hours i.e. working hours, in order for the POI associated with the area to be displayed. Other types of temporal criterion may be used. For example the user may specify that the POI are only to be displayed when the current time matches a specific time in days, hours, minutes, months, seasons, or is within a given range or pattern of days, hours, months, minutes, seasons etc. For example when the POI are holiday type locations which one might visit in the Summer, the user may define a temporal criterion requiring that the current time is in the Summer.

In addition to temporal display criteria, other criteria are specified. For example the PND may be operated in different states or modes, which may be preset or user set. Examples of such states include office or holiday type states. The user may specify a display criterion stating that the area is active, i.e. the POI associated with the area are to be displayed only when the PND is a given state, such as office, holiday etc. In this case, work type POI will not be displayed unless the apparatus is in a work state. This would avoid work type POI being displayed automatically whenever the user is within a given range of the POI, even when on holiday, in contrast to conventional arrangements.

In some arrangements a user may associate a group name with an area e.g. "fun", "sport" etc. The display criterion may then require that the apparatus has been set to enable display of POI associated with areas having this group name. For example, the user may set the apparatus such that only areas with certain group names will be active.

In some arrangements, the user may not wish all POIs meeting the location and other user specified display criteria to be automatically displayed when the criteria are deemed to have been met. In such arrangements, the PND may be arranged to select POIs meeting each criterion for display, and the user may then select from the list of available selected POIs, or otherwise confirm display of the POIs before they are shown on a digital map.

The set of POIs associated with a given predefined area will be displayed as a group when the criteria are met. The PND may be arranged to enable a user to turn off the display of individual POIs manually once they have been displayed, and separately from the remainder of the set of POIs associated with a given area. For example the user may wish to turn off a given POI corresponding to a particular store of a given name once he has visited it, leaving the locations of the other stores having the same name displayed. Conversely, the arrangement may permit a user to turn on the display of an individual POI separately from the rest of the group.

At some times the user may wish to override the criteria which have been set. Thus in embodiments the PND is operable to enable or disable the area manually, to display the POI associated therewith or prevent the POI from being displayed whether or not the criteria are or are not satisfied.

While in the preferred embodiment described, the user specifies the predefined area, as well as the display criteria to be associated therewith and adds the points of interest to the area, it is envisaged that areas having points of interest already associated therewith could be provided to the PND from another source. For example a user may be able to download a predefined area having points of interest associated therewith. Areas could be sold for example by travel companies including those points of interest mentioned in a particular travel guide, already associated with a relevant area. The user may then just associate the desired display criteria with the areas. For example the user may download an area corresponding to a state they plan to visit, including associated points of interest in the form of historical monuments. The user may then associate this area with a holiday state of the navigation device. In another possibility, a predefined and set of associated points of interest, may be received from another PND. For example the predefined area and set of points of interest associated therewith could be recommended from another user, and sent to the PND. This could be achieved using an Internet based system.

In embodiments in which the PND receives a predefined area already associated with one or more POI, the predefined area may or may not be preassociated with display criteria. For example all display criteria may be added by a user once the area and associated POI are received, or a user may modify the display criteria already associated with the area via their navigation device or another means e.g. a PC.

Likewise, once a user has set up a predefined geographic area with associated points of interest in accordance with the methods described above, they may share the area and its associated points of interest with other users using techniques similar to those described in PCT/EP2009/067454. In these arrangements, areas may be shared with or without associated display criteria. A user receiving an area with POI associated therewith may add or modify associated display criteria.

The present invention provides the ability to customise display of POI in a wide range of situations. Some examples of areas which could be set up by a user in different circumstances would be, a store manager wishes to visit all of the shops in their chain in a city. They will set up an area corresponding to the city, and associate points of interest in the form of the locations of branches of the shop in the city with the area. The store manager will associate a display criterion with this area requiring that the device is in a work mode in order for the POI to be displayed. When the store manager comes within a given range of the area with the PND in work mode, e.g when they enter the city, or are within a prespecified range of the city, such that their current location fulfils a prespecified location criterion, the locations of the shops in the city will be displayed. Another work related example would be a nurse who wishes to visit all of her patients in a given city. She may set up an area in a similar manner to the store manager described above, but specifying points of interest in the form of the locations of the houses of each of her patients in a city. Such an area would again be associated with a work state of operation of the device.

A family going on holiday might set up an area corresponding to the region they are visiting, with associated points of interest in the form of family attractions. They may associate this area with a holiday state of the device. Another holiday type option would be to set up an area corresponding to a region of a country, displaying points of interest in the form of view points to be visited with the area. The area is then associated with a holiday type criterion, such that the view points will be displayed when the user comes within the area, or a given range thereof when their PND is in a holiday state.

In embodiments, the PND may store data relating to each of a plurality of predefined areas in its memory, in association with the display criterion and points of interest data for each predefined area. The stored data may include data for predefined areas and associated display and POI data which have been set up by a user using the PND and/or data derived from other sources e.g. downloaded, another PND etc

It will be appreciated that the user may set up multiple predefined areas, each being associated with different sets of points of interest and/or display criterion. The same point of interest may be associated with multiple predefined areas. For example a user who works in a leisure centre may associate the leisure centre with two different predefined areas, which are respectively associated with a criterion requiring that the apparatus must be in a work and a leisure mode in order for the points of interest to be displayed. Thus the POI would be shown as a group of POI associated with a work mode of the device when the user is nearby and the device is in work mode, and also with a different group of POI when the user is nearby and the device is in leisure mode.

## Claims

1. A method of selecting one or more points of interest (POI) for display by a navigation apparatus, comprising the steps of;
defining (S100), by a user of the navigation apparatus, one or more geographic areas as one or more predefined geographic areas,
associating (S104) each of said one or more predefined geographic areas with one or more points of interest (POI),
associating (S102) each predefined geographic area with at least one display criterion specifying a condition to be met in order for the one or more points of interest associated with the area to be displayed by the navigation apparatus, and
automatically selecting (S114), by the navigation apparatus, the one or more points of interest associated with a predefined geographic area for display by the navigation apparatus when the at least one display criterion associated with the predefined area and a location criterion with respect to the predefined geographic area are simultaneously met; wherein the at least one display criterion is a temporal criterion and a criterion relating to a state of operation of the navigation apparatus, the temporal criterion being a requirement in relation to a given time and the state of operation being a mode of operation of the navigation apparatus selectable by a user of the navigation apparatus from a plurality of states of operation.

2. The method of claim 1, wherein the plurality of states of operation comprise a work mode and a holiday mode.

3. The method of claim 1 or 2, wherein the temporal criterion is a requirement in relation to a current time.

4. The method of any preceding claim wherein the location criterion is a requirement in relation to the position of a given location.

5. The method of claim 4, wherein the given location is a current location of the apparatus relative to the predefined area.

6. The method of any preceding claim wherein the at least one display criterion associated with each predefined geographic area is/are user specified.

7. The method of any preceding claim wherein the one or more points of interest associated with each predefined geographic area are user specified.

8. The method of any preceding claim, comprising the navigation apparatus receiving a or each said predefined area having one or more points of interest already associated therewith, and receiving from a user an indication of the at least one display criterion to be associated with the or each predefined area, and associating the or each predefined area with the at least one display criterion indicated.

9. The method of any preceding claim further comprising the step of the navigation device automatically displaying the or each point of interest selected for display.

10. The method of any preceding claim further comprising the navigation apparatus receiving from a user a selection of a displayed POI, and calculating a route to or via the selected POI, the method preferably further comprising automatically guiding the user to or via the POI using the calculated route.

11. A system for selecting one or more points of interest (POI) for display by a navigation apparatus, comprising;
means for defining, by a user of the navigation apparatus, one or more geographic areas as one or more predefined geographic areas,
means for associating each of said one or more predefined geographic areas with one or more points of interest, and
means for associating each predefined geographic area with at least one display criterion specifying a condition to be met in order for the one or more points of interest associated with the area to be displayed,
the system comprising a navigation apparatus having a display and a processor, wherein the processor is arranged to;
automatically select the one or more points of interest associated with a predefined geographic area for display by the navigation apparatus when the at least one display criterion associated with the predefined area and a location criterion with respect to the predefined geographic area are simultaneously met; wherein the at least one display criterion is a temporal criterion and a criterion relating to a state of operation of the navigation apparatus, the temporal criterion being a requirement in relation to a given time and the state of operation being a mode of operation of the navigation apparatus selectable by a user of the navigation apparatus from a plurality of states of operation.

12. A navigation apparatus comprising; a display, and a processor, wherein the processor is arranged to;
identify a predefined area having one or more points of interest (POI) associated therewith,
determine whether a given location meets a location criterion with respect to the predefined area,
wherein the predefined area is also associated with at least one display criterion specifying a condition to be met in order for the one or more points of interest associated with the predefined area to be displayed,
and the processor is further arranged to determine whether the at least one display criterion associated with the predefined area is met, and to automatically select the one or more points of interest associated with the area for display when the location criterion and the at least one display criterion are simultaneously met; wherein the at least one display criterion is a temporal criterion and a criterion relating to a state of operation of the navigation apparatus, the temporal criterion being a requirement in relation to a given time and the state of operation being a mode of operation of the navigation apparatus selectable by a user of the navigation apparatus from a plurality of states of operation.

13. The method or apparatus of any preceding claim, wherein the navigation apparatus is a portable navigation device (PND).

14. The method, apparatus or system of any preceding claim, wherein the navigation apparatus forms part of an integrated navigation system.

15. A computer program product comprising computer readable instructions executable to perform a method according to any of claims 1 to 10.

## Patentansprüche

1. Verfahren zum Auswählen von einem oder mehreren Punkten von Interesse (POI) zur Anzeige durch eine Navigationsvorrichtung, das die folgenden Schritte beinhaltet:
Definieren (S100), durch einen Benutzer der Navigationsvorrichtung, von einem oder mehreren geografischen Gebieten als ein oder mehrere vordefinierte geografische Gebiete,
Assoziieren (S104) jedes der genannten ein oder mehreren vordefinierten geografischen Gebiete mit einem oder mehreren Punkten von Interesse (POI),
Assoziieren (S102) jedes vordefinierten geografischen Gebiets mit wenigstens einem Anzeigekriterium, das eine Bedingung vorgibt, die erfüllt werden muss, damit die ein oder mehreren mit dem Gebiet assoziierten Punkte von Interesse von der Navigationsvorrichtung angezeigt werden, und
automatisches Auswählen (S114), durch die Navigationsvorrichtung, der ein oder mehreren mit einem vordefinierten geografischen Gebiet assoziierten Punkte von Interesse zur Anzeige durch die Navigationsvorrichtung, wenn das wenigstens eine mit dem vordefinierten Gebiet assoziierte Anzeigekriterium und ein Ortskriterium mit Bezug auf den vordefinierten geografischen Bereich gleichzeitig erfüllt sind; wobei das wenigstens eine Anzeigekriterium ein zeitliches Kriterium und ein Kriterium in Bezug auf einen Betriebszustand der Navigationsvorrichtung ist, wobei das zeitliche Kriterium eine Anforderung in Bezug auf eine gegebene Zeit ist und wobei der Betriebszustand ein Betriebsmodus der Navigationsvorrichtung ist, der von einem Benutzer der Navigationsvorrichtung aus einer Mehrzahl von Betriebszuständen ausgewählt werden kann.

2. Verfahren nach Anspruch 1, wobei die Mehrzahl von Betriebszuständen einen Arbeitsmodus und einen Urlaubsmodus umfassen.

3. Verfahren nach Anspruch 1 oder 2, wobei das zeitliche Kriterium eine Anforderung in Bezug auf eine aktuelle Zeit ist.

4. Verfahren nach einem vorherigen Anspruch, wobei das Ortskriterium eine Anforderung in Bezug auf die Position eines gegebenen Orts ist.

5. Verfahren nach Anspruch 4, wobei der gegebene Ort ein aktueller Ort der Vorrichtung relativ zu dem vordefinierten Gebiet ist.

6. Verfahren nach einem vorherigen Anspruch, wobei das wenigstens eine mit jedem vordefinierten geografischen Gebiet assoziierte Anzeigekriterium vom Benutzer vorgegeben wird.

7. Verfahren nach einem vorherigen Anspruch, wobei die ein oder mehreren mit jedem vordefinierten geografischen Gebiet assoziierten Punkte von Interesse vom Benutzer vorgegeben werden.

8. Verfahren nach einem vorherigen Anspruch, das beinhaltet, dass die Navigationsvorrichtung ein oder jedes genannte vordefinierte Gebiet mit einem oder mehreren bereits damit assoziierten Punkten von Interesse empfängt und von einem Benutzer eine Anzeige des wenigstens einen mit dem oder jedem vordefinierten Gebiet assoziierten Anzeigekriteriums empfängt und das oder jedes vordefinierte Gebiet mit dem wenigstens einen angezeigten Anzeigekriterium assoziiert.

9. Verfahren nach einem vorherigen Anspruch, das ferner den Schritt beinhaltet, dass das Navigationsgerät automatisch den oder jeden zur Anzeige ausgewählten Punkt von Interesse anzeigt.

10. Verfahren nach einem vorherigen Anspruch, das ferner beinhaltet, dass die Navigationsvorrichtung von einem Benutzer eine Auswahl eines angezeigten POI empfängt und eine Route zu dem oder über den gewählten POI berechnet, wobei das Verfahren ferner das automatische Führen des Benutzers zu oder über den POI über die berechnete Route beinhaltet.

11. System zum Auswählen von einem oder mehreren Punkten von Interesse (POI) zur Anzeige durch eine Navigationsvorrichtung, das Folgendes umfasst:
Mittel zum Definieren, durch einen Benutzer der Navigationsvorrichtung, eines oder mehrerer geografischer Gebiete als ein oder mehrere vordefinierte geografische Gebiete,
Mittel zum Assoziieren jedes der genannten ein oder mehreren vordefinierten geografischen Gebiete mit einem oder mehreren Punkten von Interesse, und
Mittel zum Assoziieren jedes vordefinierten geografischen Gebiets mit wenigstens einem Anzeigekriterium, das eine Bedingung vorgibt, die zu erfüllen ist, damit die ein oder mehreren mit dem Gebiet assoziierten Punkte von Interesse angezeigt werden,
wobei das System eine Navigationsvorrichtung mit einem Display und einem Prozessor umfasst, wobei der Prozessor ausgelegt ist zum:
automatischen Auswählen der ein oder mehreren mit einem vordefinierten geografischen Gebiet assoziierten Punkte von Interesse zur Anzeige durch die Navigationsvorrichtung, wenn das wenigstens eine mit dem vordefinierten Gebiet assoziierte Anzeigekriterium und ein Ortskriterium mit Bezug auf das vordefinierte geografische Gebiet gleichzeitig erfüllt sind; wobei das wenigstens eine Anzeigekriterium ein zeitliches Kriterium und ein Kriterium in Bezug auf einen Betriebszustand der Navigationsvorrichtung ist, wobei das zeitliche Kriterium eine Anforderung in Bezug auf eine gegebene Zeit ist und der Betriebszustand ein Betriebsmodus der Navigationsvorrichtung ist, der von einem Benutzer der Navigationsvorrichtung aus einer Mehrzahl von Betriebszuständen ausgewählt werden kann.

12. Navigationsvorrichtung, die Folgendes umfasst:
ein Display und einen Prozessor, wobei der Prozessor ausgelegt ist zum:
Identifizieren eines vordefinierten Gebiets mit einem oder mehreren damit assoziierten Punkten von Interesse (POI),
Feststellen, ob ein gegebener Ort ein Ortskriterium mit Bezug auf das vordefinierte Gebiet erfüllt,
wobei das vordefinierte Gebiet auch mit wenigstens einem Anzeigekriterium assoziiert ist, das eine Bedingung vorgibt, die zu erfüllen ist, damit die ein oder mehreren mit dem vordefinierten Gebiet assoziierten Punkte von Interesse angezeigt werden,
und der Prozessor ferner ausgelegt ist zum Feststellen, ob das wenigstens eine mit dem vordefinierten Gebiet assoziierte Anzeigekriterium erfüllt ist, und zum automatischen Auswählen der ein oder mehreren mit dem Gebiet assoziierten Punkte von Interesse zur Anzeige, wenn das Ortskriterium und das wenigstens eine Anzeigekriterium gleichzeitig erfüllt sind; wobei das wenigstens eine Anzeigekriterium ein zeitliches Kriterium und ein Kriterium in Bezug auf einen Betriebszustand der Navigationsvorrichtung ist, wobei das zeitliche Kriterium eine Anforderung in Bezug auf eine gegebene Zeit ist und der Betriebszustand ein Betriebsmodus der Navigationsvorrichtung ist, der von einem Benutzer der Navigationsvorrichtung aus einer Mehrzahl von Betriebszuständen ausgewählt werden kann.

13. Verfahren oder Vorrichtung nach einem vorherigen Anspruch, wobei die Navigationsvorrichtung ein tragbares Navigationsgerät (PND) ist.

14. Verfahren, Vorrichtung oder System nach einem vorherigen Anspruch, wobei die Navigationsvorrichtung Teil eines integrierten Navigationssystems bildet.

15. Computerprogrammprodukt, das computerlesbare Befehle umfasst, die ausgeführt werden können, um ein Verfahren nach einem der Ansprüche 1 bis 10 durchzuführen.

## Revendications

1. Procédé de sélection d'un ou plusieurs points d'intérêt (POI) pour un affichage par un appareil de navigation, comprenant les étapes suivantes :
la définition (S100), par un utilisateur de l'appareil de navigation, d'une ou plusieurs aires géographiques en tant qu'une ou plusieurs aires géographiques prédéfinies,
l'association (S104) de chacune desdites une ou plusieurs aires géographiques prédéfinies à un ou plusieurs points d'intérêt (POI),
l'association (S102) de chaque aire géographique prédéfinie à au moins un critère d'affichage spécifiant une condition devant être satisfaite pour que lesdits un ou plusieurs points d'intérêt associés à l'aire soient affichés par l'appareil de navigation, et
la sélection automatique (S114), par l'appareil de navigation, desdits un ou plusieurs points d'intérêt associés à une aire géographique prédéfinie pour un affichage par l'appareil de navigation lorsque l'au moins un critère d'affichage associé à l'aire prédéfinie et un critère de localisation par rapport à l'aire géographique prédéfinie sont satisfaits simultanément ; dans lequel l'au moins un critère d'affichage est un critère temporel et un critère relatif à un état de fonctionnement de l'appareil de navigation, le critère temporel étant une exigence en rapport avec un temps donné et l'état de fonctionnement étant un mode de fonctionnement de l'appareil de navigation apte à être sélectionné par un utilisateur de l'appareil de navigation parmi une pluralité d'états de fonctionnement.

2. Procédé de la revendication 1, dans lequel la pluralité d'états de fonctionnement comprend un mode de travail et un mode de vacances.

3. Procédé de la revendication 1 ou 2, dans lequel le critère temporel est une exigence en rapport avec un temps actuel.

4. Procédé d'une quelconque revendication précédente dans lequel le critère de localisation est une exigence en rapport avec la position d'une localisation donnée.

5. Procédé de la revendication 4, dans lequel la localisation donnée est une localisation actuelle de l'appareil relativement à l'aire prédéfinie.

6. Procédé d'une quelconque revendication précédente dans lequel l'au moins un critère d'affichage associé à chaque aire géographique prédéfinie est/sont spécifié(s) par l'utilisateur.

7. Procédé d'une quelconque revendication précédente dans lequel lesdits un ou plusieurs points d'intérêt associés à chaque aire géographique prédéfinie sont spécifiés par l'utilisateur.

8. Procédé d'une quelconque revendication précédente, comprenant le fait que l'appareil de navigation reçoit une ou chaque ladite aire prédéfinie ayant un ou plusieurs points d'intérêt déjà associés à celle-ci, et reçoit à partir d'un utilisateur une indication de l'au moins un critère d'affichage destiné à être associé à la ou chaque aire prédéfinie, et associe la ou chaque aire prédéfinie à l'au moins un critère d'affichage indiqué.

9. Procédé d'une quelconque revendication précédente comprenant en outre l'étape permettant au dispositif de navigation d'afficher automatiquement le, ou chaque, point d'intérêt sélectionné pour un affichage.

10. Procédé d'une quelconque revendication précédente comprenant en outre le fait que l'appareil de navigation reçoit, à partir d'un utilisateur, une sélection d'un POI affiché, et calcule un itinéraire vers ou via le POI sélectionné, le procédé comprenant en outre de préférence le fait de guider automatiquement l'utilisateur vers ou via le POI grâce à l'utilisation de l'itinéraire calculé.

11. Système pour sélectionner un ou plusieurs points d'intérêt (POI) pour un affichage par un appareil de navigation, comprenant :
des moyens pour faire définir, par un utilisateur de l'appareil de navigation, une ou plusieurs aires géographiques en tant qu'une ou plusieurs aires géographiques prédéfinies,
des moyens pour associer chacune desdites une ou plusieurs aires géographiques prédéfinies à un ou plusieurs points d'intérêt, et
des moyens pour associer chaque aire géographique prédéfinie à au moins un critère d'affichage spécifiant une condition devant être satisfaite pour que lesdits un ou plusieurs points d'intérêt associés à l'aire soient affichés,
le système comprenant un appareil de navigation possédant un afficheur et un processeur, dans lequel le processeur est agencé de façon à :
sélectionner automatiquement lesdits un ou plusieurs points d'intérêt associés à une aire géographique prédéfinie pour un affichage par l'appareil de navigation lorsque l'au moins un critère d'affichage associé à l'aire prédéfinie et un critère de localisation par rapport à l'aire géographique prédéfinie sont satisfaits simultanément ; dans lequel l'au moins un critère d'affichage est un critère temporel et un critère relatif à un état de fonctionnement de l'appareil de navigation, le critère temporel étant une exigence en rapport avec un temps donné et l'état de fonctionnement étant un mode de fonctionnement de l'appareil de navigation apte à être sélectionné par un utilisateur de l'appareil de navigation parmi une pluralité d'états de fonctionnement.

12. Appareil de navigation comprenant : un afficheur, et un processeur, dans lequel le processeur est agencé de façon à :
identifier une aire prédéfinie ayant un ou plusieurs points d'intérêt (POI) associés à celle-ci,
déterminer si une localisation donnée satisfait à un critère de localisation par rapport à l'aire prédéfinie,
dans lequel l'aire prédéfinie est également associée à au moins un critère d'affichage spécifiant une condition devant être satisfaite pour que lesdits un ou plusieurs points d'intérêt associés à l'aire prédéfinie soient affichés,
et le processeur est agencé en outre de façon à déterminer si l'au moins un critère d'affichage associé à l'aire prédéfinie est satisfait, et à sélectionner automatiquement lesdits un ou plusieurs points d'intérêt associés à l'aire pour un affichage lorsque le critère de localisation et l'au moins un critère d'affichage sont satisfaits simultanément ; dans lequel l'au moins un critère d'affichage est un critère temporel et un critère relatif à un état de fonctionnement de l'appareil de navigation, le critère temporel étant une exigence en rapport avec un temps donné et l'état de fonctionnement étant un mode de fonctionnement de l'appareil de navigation apte à être sélectionné par un utilisateur de l'appareil de navigation parmi une pluralité d'états de fonctionnement.

13. Procédé ou appareil d'une quelconque revendication précédente, dans lequel l'appareil de navigation est un dispositif de navigation portable (PND).

14. Procédé, appareil ou système d'une quelconque revendication précédente, dans lequel l'appareil de navigation fait partie d'un système de navigation intégré.

15. Produit à programme informatique comprenant des instructions lisibles par ordinateur exécutables pour réaliser un procédé selon l'une quelconque des revendications 1 à 10.
